# EUROPÄISCHE PATENTANMELDUNG

(11) **EP 2 073 359 A1**
(43) Veröffentlichungstag der Anmeldung: **24.06.2009**
(21) Anmeldenummer: 07076114.3
(22) Anmeldetag: 20.12.2007
(51) Int. Cl.: H02K 7/14, A61C 1/06

(54) **Schlauchmotor**

(71) Anmelder: SycoTec GmbH & Co. KG, 88299 Leutkirch im Allgäu (DE)
(72) Erfinder: Bischof, Thomas, 87758 Illerbeuren (DE); Mack, Karl, 88299 Leutkich (DE)
(74) Vertreter: Pfenning, Meinig & Partner GbR

(57) **Zusammenfassung**

Die vorliegende Erfindung betrifft einen Schlauchmotor (1) zum Ankuppeln dentaler Instrumente (2), enthaltend einen Motor mit einem Stator (5), einem Rotor sowie einer Kupplung (12) zum Ankuppeln dentaler Instrumente sowie einen Schlauch (13), wobei Medienleitungen (6, 7, 8) zur Zuführung von Medien zu dem dentalen Instrument (2) durch den Schlauch (13) geführt sind und der Schlauch an dem dem Motor abgewandten Ende mit einer Antriebs- und Steuereinheit (14) zur Zuführung und Regelung der Medien verbindbar ist.

Der erfindungsgemäße Schlauchmotor zeichnet sich durch eine sehr kompakte Bauweise aus, wodurch für einen Bediener ein ermüdungsfreies Arbeiten auch über einen längeren Zeitraum möglich wird.

## Beschreibung

Die vorliegende Erfindung betrifft Elektromotore zum Antrieb von dentalen Instrumenten.

Zahnärztliche Antriebssysteme umfassen üblicherweise ein dentales Instrument zur Aufnahme eines rotierenden Werkzeugs sowie einen Antriebsmotor, der über eine Schnellkupplung (z.B. eine Kupplung nach DIN ISO 3964) mit dem Instrument gekoppelt werden kann. Der Motor wiederum wird vorzugsweise über eine weitere Schnellkupplung mit einem Versorgungsschlauch verbunden, wobei der Versorgungsschlauch die Stromzufuhr für den Elektromotor sowie Medienzuleitungen für Wasser und Luft enthält. Dies sind also üblicherweise drei einzelne Komponenten, die nach dem Stand der Technik steckbar gekoppelt sind. Der Nachteil dieser üblichen Anordnungen ist jedoch das hohe Gewicht sowie die ungünstige Lage des Schwerpunkts des Elektromotors. Der Bearbeiter (beispielsweise ein Zahnarzt oder ein Zahntechniker) greift das System meist im Bereich des Motors. Aufgrund der oben genannten nachteiligen Situation beim Gewicht bzw. der Schwerpunktlage kommt es zu einer schnelleren Ermüdung des Bedieners.

Es ist daher die Aufgabe der vorliegenden Erfindung, ein System zum Antrieb eines dentalen Instruments bereitzustellen, das leichtgewichtig und kleinbauend ist, um somit für einen Zahnarzt bzw. einen Zahntechniker ein erleichtertes Arbeiten auch über längere Zeit zu gewährleisten.

Diese Aufgabe wird durch einen Schlauchmotor nach Anspruch 1 gelöst.

Erfindungsgemäß ist ein Schlauchmotor zum Ankuppeln dentaler Instrumente, enthaltend einen Motor mit einem Stator, einem Rotor, einer Kupplung zum Ankuppeln dentaler Instrumente sowie einem Schlauch, wobei Medienleitungen zur Zuführung von Medien zu dem dentalen Instrument durch den Schlauch geführt sind und der Schlauch an dem dem Motor abgewandten Ende mit einer Antriebs- und Steuereinheit zur Zuführung und Regelung der Medien verbindbar ist. Der Elektromotor ist hierbei mit dem Schlauch ohne Trennkupplung verbunden. Das heißt, dass im normalen Betrieb, beispielsweise durch den Zahnarzt, eine Abkopplung des Motors vom Schlauch nicht möglich ist. Dies ist nur möglich, nachdem das entsprechende Gehäuse geöffnet wird. Es ist zudem auch nicht möglich, beispielsweise zur Desinfektion des Motors, einfach eine Kupplung zu lösen. Stattdessen kann beispielsweise die Gesamtanordnung (Motor inklusive Schlauch) insgesamt desinfiziert werden; dies sichert auch eine höchstmögliche Desinfektion der Gesamtanordnung.

Der Vorteil des "integrierten Schlauchmotors", also der erstmaligen Idee, dass hier der Schlauch mit der Motoreinheit verbunden wird, liegt vor allem im kleinbauenden Gesamtsystem.

Es ist (insbesondere mit den erfindungsgemäßen leistungsfähigen und kleinen Motoren) möglich, den Schlauchmotor, insbesondere die vom Bediener in der Hand gehaltene Einheit um den Motor herum, sehr kurz und klein zu halten. Es ist also möglich, ein kurzes und leichtbauendes ergonomisches System zu bauen, welches volle Kompatibilität zu den derzeit am Markt üblichen dentalen Instrumenten (z. B. mit einer Kupplung nach DIN ISO 3964) aufweist und hierbei keinerlei Einschränkungen bezüglich Leistung, Drehzahl und Drehmoment zeigt.

Dies kommt beispielsweise dadurch zum Ausdruck, dass das Verhältnis l_{G} des Gehäuses des Schlauchmotors vom Anschlag der Kupplung für dentale Instrumente bis zum schlauchseitigen Ende des Gehäuses einschließlich Führungshülse in Beziehung gesetzt zu dem größten Radialmaß (D_{G}) des Gehäuses des Schlauchmotors zwischen 80/19 und 45/23, vorzugsweise zwischen 65/19 und 60/23 liegt.

Eine weitere vorteilhafte Weiterbildung sieht vor, dass das Drehmoment des Elektromotors in einem Drehzahlbereich zwischen 10 U/min und 50.000 U/min, vorzugsweise im Bereich zwischen 100 U/min und 50.000 U/min, durchgehend mehr als ein 1 Ncm, vorzugsweise als 1,2 Ncm, besonders vorzugsweise mehr als 1,5 Ncm beträgt. Hierdurch wird erreicht, dass bei Beibehaltung eines "üblichen" Durchmessermaßes sehr leistungsfähige Motoren erreicht werden. Mit "üblichem Durchmessermaß" ist die größte radiale Ausdehung der Handhabungseinheit gemeint, diese passt sich üblicherweise an entsprechende Querschnitte von Instrumenten, z. B. nach DIN ISO 3964, an. Trotzdem ist auch die Länge des Motors bzw. dadurch auch des Gehäuses des Schlauchmotors relativ gering; sie beträgt vom Anschlag (der Anschlagkante) der Kupplung zum dentalen Instrument hin (also nicht von der Spitze der Kupplung, sondern von der Anschlagkante) zum Ende des Gehäuses zwischen 30 und 55 mm. Bei einer sich schlauchseitig anschließenden Führungshülse für den Schlauch kann sich die Gesamtlänge auf 45 bis 80 mm verlängern (also gerechnet von der Anschlagkante bis zum Ende der Führungshülse).

Die genannten Längen beziehen sich hierbei insbesondere auf Durchmesser des Gehäuses des Schlauchmotors an der größten Stelle zwischen 19 und 23 mm.

Hieraus wird klar, dass selbst bei diesen kleinen Maßen, beispielsweise mit dem neuen erfindungsgemäßen Motor, der eine Grammesche Statorwicklung aufweist, einerseits ein kleinbauendes Gerät zur Verfügung gestellt werden kann, das allerdings trotzdem noch sehr starke Drehmomente aufweist.

Dadurch, dass beispielsweise im Bereich zwischen 10 U/min und 50.000 U/min ein Drehmoment von mehr als 1 Ncm jeweils konstant anliegt, kann selbst mit diesem relativ kleinbauenden Instrument bei einem Einsatz großvolumiger Bohrer in dem dentalen Instrument eine Zahnbehandlung selbst bei niedrigsten Drehzahlen durchgeführt werden, ohne dass der Bohrer "blockiert". Dies ist mit kleinbauenden Geräten nach dem Stand der Technik üblicherweise nicht möglich, da diese in der Regel nicht das notwendige Drehmoment aufbringen können.

Durch den Verzicht auf eine Trennkupplung im Übergangsbereich vom Elektromotor zum Schlauch kann die Gesamtanordnung kleinbauender und leichter erstellt werden. Zudem bestehen keine Fehlerquellen durch eine zusätzliche Kupplung in diesem Bereich. Schließlich kommt es nicht zu Verlusten von Medien, die durch sonst übliche Kupplungen in diesen Bereich geschleust werden, beispielsweise zu einem Druckverlust von Luft oder auch einem Lichtverlust durch Streulicht.

Der erfindungsgemäße Schlauchmotor sieht vor, dass der Elektromotor kupplungsfrei mit einem Schlauch verbunden ist, wobei der Schlauch an dem dem Elektromotor abgewandten Ende eine Antriebs- und Steuereinheit zur Zuführung und Regelung von Medien aufweist. D.h., dass durch den Schlauch Medienleitungen verlaufen, die kupplungsfrei dann bis zur Kupplung für das dentale Instrument verlaufen und daher auf mindestens eine Kupplung verzichtet werden kann, die üblicherweise zwischen dem Schlauchstück und dem hieran durch eine Kupplung anzuschließenden Motor liegt.

In einer besonders vorzugsweisen Ausführung kann durch den Schlauch auch noch ein Lichtleiter (Medienleitung zur Führung von Licht) verlaufen. Dies ermöglicht es, dass in der Antriebs- und Steuereinheit eine Lichtquelle angeordnet wird und dieses Licht durch den Schlauch und den Motor hindurch dann zum dentalen Instrument hin geführt wird. Hierdurch kann der erfindungsgemäße Schlauchmotor noch kleiner gebaut werden, da beispielsweise keine Lichtquelle im Bereich des Motors angebracht werden muss. Zudem ergibt sich der Vorteil, dass der Bediener nicht durch die von der Lichtquelle bedingte Erwärmung unangenehm beeinflusst wird. Schließlich ist bei dem kupplungsfreien Schlauchmotor besonders vorteilhaft, dass beim Übergang vom Schlauch zum Motor keine Kupplung vorgesehen ist, die im Falle eines Lichtleiters zu einem Helligkeitsverlust durch Streulicht führen würde.

Der erfindungsgemäße Schlauch kann praktisch beliebig lang gestaltet werden, die größte Länge des Schlauchmotors (also Schlauch einschließlich Elektromotor von der Spitze der Kupplung zum dentalen Instrument bis hin zur Mündung des Schlauches in die Antriebs- und Steuereinheit) kann ohne Weiteres zwischen 1 m und 3 m betragen.

An der erfindungsgemäßen integrierten Bauweise ist insbesondere die leichte Handhabung für den Bediener hervorzuheben, die sich auch darin äußert, dass der Schlauchmotor für die Bedienerhand günstige Abmaße aufweist.

Das Verhältnis der Länge des Gehäuses des Schlauchmotors von der Anschlagkante der Kupplung für dentale Instrumente bis zum schlauchseitigen Ende des Gehäuses des Schlauchmotors zu dem größten Radialmaß des Schlauchmotors (hierunter wird üblicherweise der Durchmesser des Schlauchmotors an der "dicksten" Stelle verstanden; sollte dies kein Kreis sein, wird die größte Diagonale in einem Querschnitt senkrecht zur Richtung einer im Elektromotor gelagerten Antriebswelle hierunter verstanden) beträgt zwischen 55/19 und 30/23, vorzugsweise zwischen 45/19 und 40/23.

Die absolute Länge des Gehäuses des Schlauchmotors von der Anschlagkante der Kupplung für dentale Instrumente bis zum schlauchseitigen Ende beträgt zwischen 30 mm und 55 mm bzw. bis zum Ende einer sich an das Gehäuse anschließenden Führungshülse zwischen 45 mm und 80 mm.

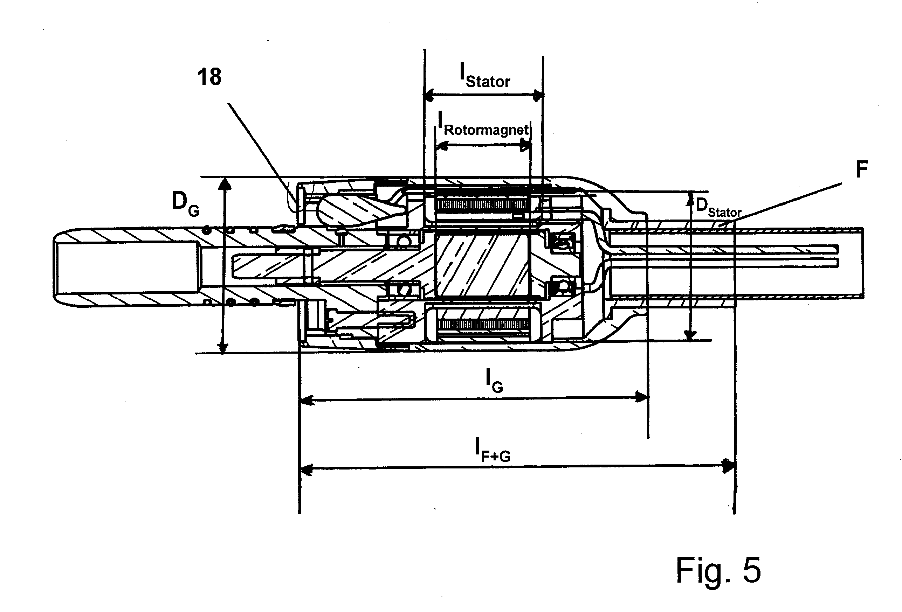

Der größte Durchmesser (D_{G}, siehe Fig. 5) des Gehäuses des Schlauchmotors beträgt vorzugsweise zwischen 19 und 23 mm. Hierdurch ist das Gerät angenehm zu greifen, und es ergibt sich ein relativ "harmonischer" Übergang zu üblichen dentalen Instrumenten, die auch etwa diesen Durchmesserbereich haben.

In einer Weiterbildung ist als Statorwicklung eine radial in mehrere Abschnitte geteilte Grammesche Statorwicklung vorgesehen, wobei zwischen einzelnen Abschnitten dieser Statorwicklung zumindest bereichsweise Medienleitungen verlaufen.

Unter "Grammesche Statorwicklung" wird im Kontext dieser Anmeldung verstanden, dass der Stator eine Jochbewicklung bzw. eine Ringwicklung nach Gramme aufweist. Der Vorteil dieser Technologie besteht darin, dass die Leiter im magnetisch aktiven, dem permanentmagnetischen Rotormagneten zugewandten Bereich, sowie im passiven Bereich auf dem Statorrücken im Wesentlichen in axialer Richtung verlaufen. Dadurch wird es möglich, die Medien im Durchmesserbereich der Wicklung innen zwischen Rotor und Statorrückschluss sowie außen im Bereich der Wicklungsrückführung hindurchzuführen. Idealerweise geschieht dies zwischen den oben genannten einzelnen Abschnitten der Statorwicklung.

Mit anderen Worten werden die Wicklungsdrähte bei dieser Wicklung um den vorzugsweise ringförmigen Statorkern herumgewickelt und sind hierbei (zumindest auf der radialen Innenseite sowie radialen Außenseite des Statorkerns) im Wesentlichen parallel zu der Welle. Erfindungsgemäß ist hierbei jedoch auch eine Winkelabweichung möglich.

Mit der erfindungsgemäßen Durchleitung von Medienleitungen durch den Stator hindurch (und hierbei möglicherweise sogar vom Statorrückschluss umschlossenen Bereich) wird der Stator voll für Mediendurchleitungen bei Elektromotoren zum Antrieb von dentalen Instrumenten nutzbar gemacht.

Dies führt zunächst einmal dazu, dass in radialer Richtung die Ausdehnung des Motors bzw. des Handgeräts, das das dentale Instrument aufnimmt, klein gehalten werden kann.

Ein weiterer großer Vorteil ist, dass aufgrund der erfindungsgemäßen Statorwicklung der Elektromotor (d.h. sowohl der Stator- als auch der Rotormagnet) in Richtung des Rotors/der Rotorwelle sehr kurz gehalten werden können.

Hierdurch wird erfindungsgemäß die Baugröße sowohl in Längsrichtung als auch in radialer Richtung reduziert und es ergeben für den Bediener die Vorteile des ermüdungsfreien Arbeitens.

Der erfindungsgemäße Motor ist vorteilhaft als Permanentmagnet-Synchronmotor bzw. als kollektorloser Gleichstrommotor (BLDC-Motor) ausgeführt. Hierdurch ergibt sich, insbesondere bei den hochdrehenden Anwendungen die im Dentalbereich erforderlich sind, eine relativ verschleißfreie Anordnung.

Die Abschnitte der Statorwicklung stellen vorteilhafterweise jeweils Einzelspulen dar. Hierbei können jeweils diametral gegenüberliegende Einzelspulen miteinander jeweils zu einem Spulenpaar verbunden und zu einer Phase verschaltet sein. Hierdurch ergibt sich zu noch vertretbaren Baukosten ein relativ guter Wirkungsgrad bei einer kompakten Bauweise und einem geringen Verschleiß.

Die Einzelspulen bzw. die einzelnen Abschnitte sind hierbei vorzugsweise mehrschichtig gewickelt. Die Einzelspulen bzw. Abschnitte selbst sind vorzugsweise nicht überlappend angeordnet, um insbesondere auch radialen Bauraum zu sparen.

Der Stator weist vorzugsweise einen Rückschlussring auf, wobei dieser Rückschlussring vorzugsweise von einem Spulenkörper des Stators umschlossen wird. Durch diese mehrteilige modulare Bauform werden Herstellungskosten minimiert und es können Spulenkörper unterschiedlicher Art zum Einsatz kommen, die an die jeweiligen Medienleitungen, d.h. an deren Größe bzw. Verlauf, angepasst sind.

Die Statorwicklung ist hierbei um im Wesentlichen kreisringsegmentförmige Abschnitte des Rückschlussrings bzw. des Spulenkörpers gewickelt. Der Rückschlussring ist wiederum im Sinne eines kostengünstigen und modularen Aufbaus aus mehreren Lagen metallischen Blechs aufgebaut. Vorzugsweise ist die Statorwicklung mit einem Harzmaterial bzw. einem Kunststoffmaterial ausgefüllt bzw. ausgegossen.

Es ist sehr vorteilhaft, dass der erfindungsgemäße Elektromotor trotz seiner kleinbauenden Größe eine in der Praxis übliche Kupplung zur Aufnahme eines anzutreibenden dentalen Instruments aufweist, insbesondere eine Kupplung nach DIN ISO 3964, die somit den Anbau bestehender und kostengünstiger Instrumente erlaubt.

Der Rückschlussring des Elektromotors ist vorzugsweise radial außen und/oder radial innen von dem Spulenkörper umschlossen. Hierbei können sich zwischen den Abschnitten der Statorwicklung radiale Erhebungen des Spulenkörpers befinden, um hierin insbesondere geometrisch klare Führungen der Medienleitungen zu erreichen und hierbei auch noch ein akzeptables Temperaturgefälle zu der möglicherweise wärmeren Statorwicklung zu erhalten. Die Medienleitungen laufen hierbei vorzugsweise in Längsrichtung der Welle durch den Stator bzw. den Spulenkörper hindurch. Insbesondere durch die kurzbauende Anordnung ist hierbei die Erwärmung der Medien (Luft bzw. Wasser) zu vernachlässigen.

Die Medienleitungen sind vorzugsweise Medienleitungen zur Durchführung von Wasser, Luft (insbesondere Druckluft) oder auch Licht.

Das Verhältnis der Größenausdehnung des Stators radial zur Welle zur größten Ausdehnung des Stators in Richtung der Welle (Längsrichtung) beträgt vorzugsweise zwischen 0,8 und 5, besonders vorzugsweise zwischen 1 und 3, in einer ganz besonders vorzugsweisen Ausführung zwischen 1,2 und 1,6.

Mit den oben genannten Ausdehnungen des Stators (in radialer bzw. axialer Richtung) sind hierbei die größten Abmessungen der jeweiligen Wicklungsabschnitte gemeint.

Vorzugsweise liegt das Verhältnis der größten Ausdehnung des Stators radial zur Welle zur größten Länge des Rotormagneten (Länge des Rotormagneten in Richtung der Welle) zwischen 1 und 6, vorzugsweise zwischen 1,1 und 2, besonders vorzugsweise zwischen 1,6 und 1,8.

Hierdurch wird klar, dass der erfindungsgemäße Motor für seine Leistungsklasse ganz besonders kurzbauend hergestellt werden kann. Mit "größter Ausdehnung des Stators radial zur Welle" ist wiederum die größte Ausdehnung der elektrisch wirksamen Teile, vorzugsweise der Statorwicklung, gemeint. Mit "größten Länge des Rotormagneten in Wellenrichtung" ist auch nur der Abschnitt mit tatsächlich permanentmagnetischem Material gemeint, also ohne anschließende (beispielsweise im Betrieb später magnetisierte) Metallabschnitte.

Die Erfindung wird nun anhand mehrerer Figuren erläutert. Es zeigen:
- Fig. 1: eine Ansicht eines erfindungsgemäßen Schlauchmotors, der links eine Kupplung zum Anstecken eines dentalen Instruments aufweist,
- Fig. 2: eine teilweise freigeschnittene Ansicht eines im Schlauchmotor enthaltenen Stators,
- Fign. 3a bis 3c: verschiedene Ansichten eines erfindungsgemäßen Schlauchmotors,
- Fig. 4: Darstellung des Übergangs vom erfindungsgemäßen Schlauchmotor zu einem dentalen Instrument 2 hin, und
- Fig. 5: einen Querschnitt eines Schlauchmotors.

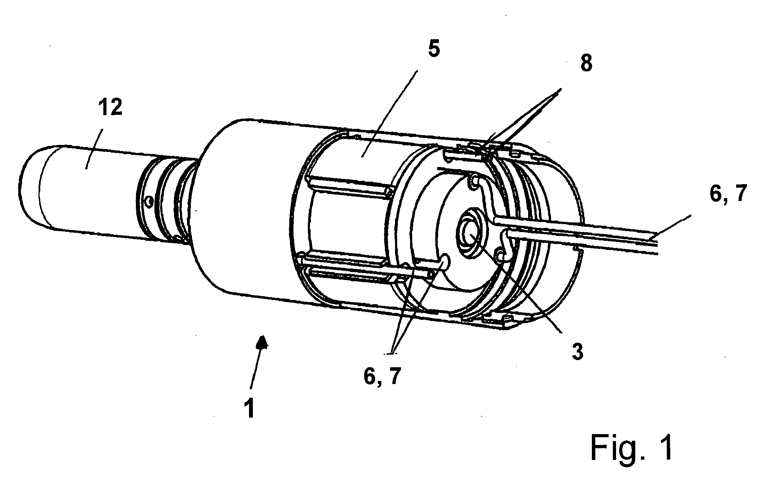

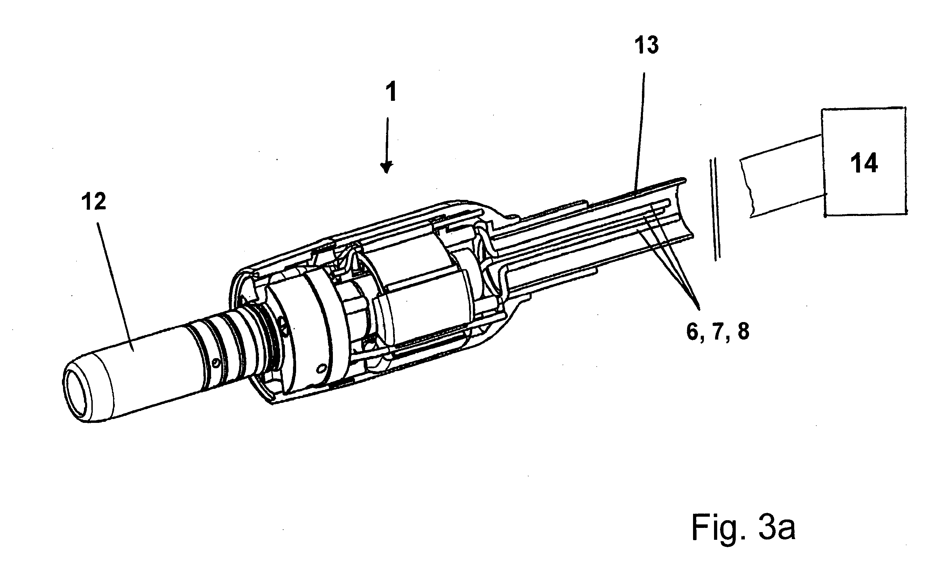

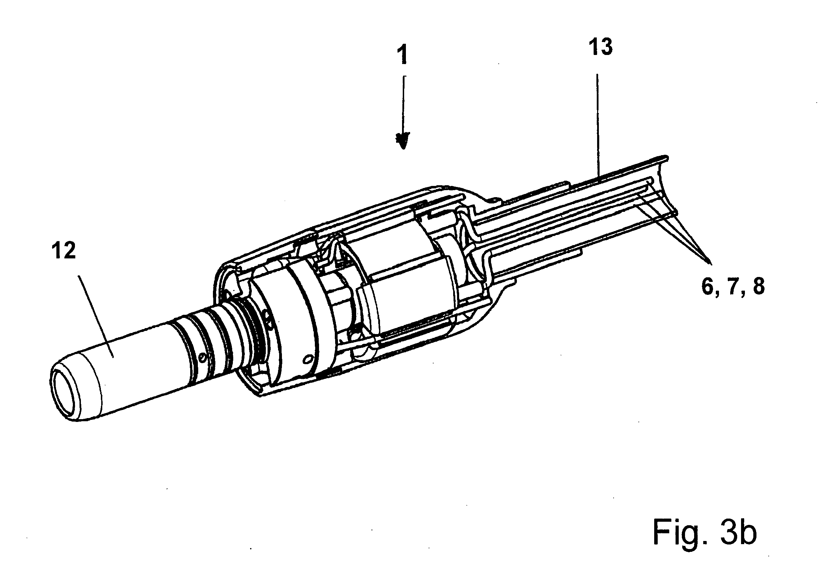

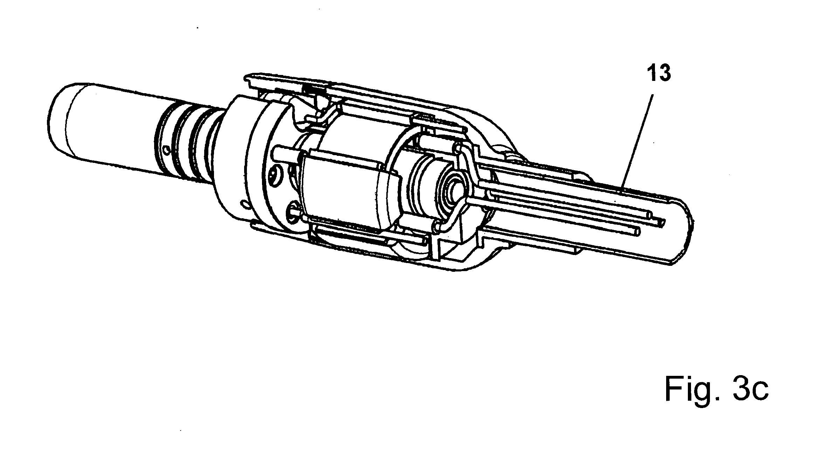

Fig. 1 zeigt einen Elektromotor bzw. Schlauchmotor 1. Dieser ist in einem Gehäuse untergebracht, an dem eine Kupplung 12 nach DIN ISO 3964 zum Anschluss dentaler Instrumente angebracht ist. Der Elektromotor 1 selbst weist eine Welle 3 auf, die mit einem Rotormagneten 4 verbunden ist. Konzentrisch hierum angeordnet ist ein Stator 5, Medienleitungen 6 bzw. 7 (für Wasser bzw. Luft) und Licht (Medienleitung 8) laufen durch den Stator hindurch, d.h. sie müssen nicht mehr außerhalb des Stators geführt werden. **Die "Medienleitung für Licht" kann entweder ein Lichtleiter (z.B. Glasfaser) sein, alternativ auch eine Stromzuführung zu einer nahe der Kupplung angebrachten Leuchte bzw. Leuchtdiode.** Mit "durch den Stator" bzw. "innerhalb des Stators" ist hierbei gemeint, dass die Medienleitungen radial innerhalb elektrisch wirksamer Bereiche des Stators verlaufen, vorliegend radial innerhalb der größten Abmessungen der Statorwicklungen. Die Medienleitungen bzw. Stromzuführungen für den erfindungsgemäßen Motor verlaufen durch einen rechts in Fig. 1 nicht mehr dargestellten Schlauch, der entweder mit dem Elektromotor fest verbunden sein kann oder an diesen über eine Kupplung ankuppelbar ist. Die Medienleitungen springen hierbei auf der der Kupplung 12 abgewandten Seite vorzugsweise radial nach innen (s. Fig. 3), um in diesem Bereich einen Schlauch mit kleinem Durchmesser möglichst bald hinter dem Ende des Elektromotors bereitzustellen.

Der Elektromotor 1 ist ein Permanentmagnet-Synchronmotor, vorliegend eine kollektorloser Gleichstrommotor (BLDC-Motor).

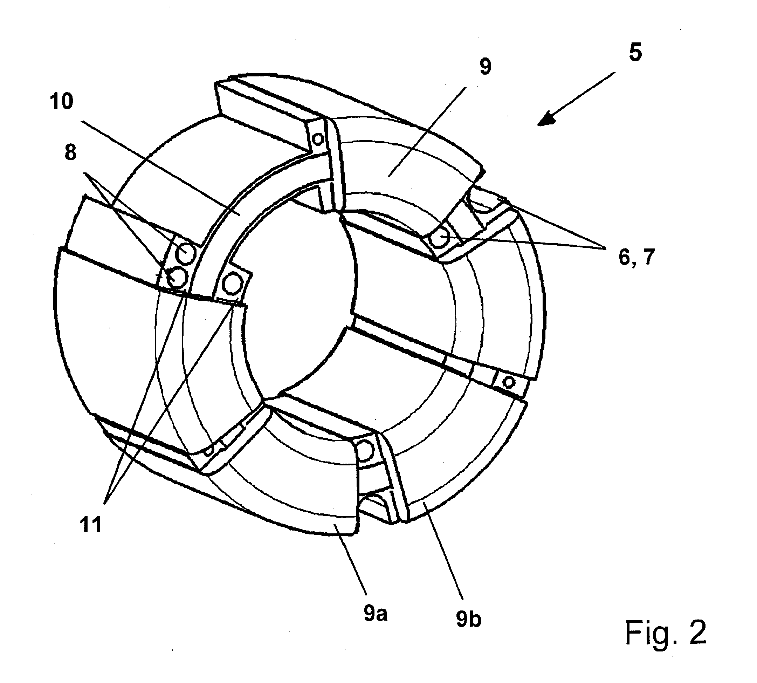

Fig. 2 zeigt einen detaillierten, teilweise freigeschnittenen Aufbau des Stators 5. Dieser Stator weist eine Statorwicklung 9 auf, die nach Gramme gewickelt ist, d.h., dass um den Spulenkörper 11, der radial einen zum Spulenkörper gehörenden Rückschlussring 10 einschließt. Die Wicklungsdrähte umlaufen hierbei den von dem Spulenkörper gebildeten äußeren Ring bzw. ringförmigen Statorkern. In der in Fig. 2 gezeigten Darstellung ist die Wicklung 9 hierbei in mehrere Abschnitte unterteilt, die jeweils Kreisringsegmente darstellen. Diese kreisringsegmentförmige Abschnitte (beispielsweise ein erster Abschnitt 9a oder ein zweiter Abschnitt 9b) sind vorzugsweise als Einzelspulen dargestellt. Die Wicklungsdrähte dieser Einzelspulen sind im Wesentlichen in Verlaufsrichtung der Welle 3 angeordnet (diese verläuft im Wesentlichen fluchtend zur Kupplung 12, siehe Fig. 1). Der Verlauf der Wicklungsdrähte entlang der Welle 3 gilt hierbei natürlich nur für die radiale Innen- bzw. radiale Außenseite, an den Stirnseite verläuft der Wicklungsdraht im Wesentlichen radial nach außen bzw. radial nach innen.

Insgesamt sind sechs Einzelspulen 9a, 9b etc. vorgesehen, wobei die jeweils diametral gegenüberliegenden Einzelspulen miteinander jeweils zu einem Spulenpaar verbunden und zu einer Phase verschaltet sind.

Die Abschnitte 9a, 9b etc. bzw. Einzelspulen sind mehrschichtig gewickelt und überlappen sich auch in ihren Randbereichen nicht. Die entsprechende Statorwicklung ist mit einem Kunstharz bzw. Kunststoff ausgegossen.

Der Stator 5 zeigt den Rückschlussring 10, der radial innen und radial außen von dem Spulenkörper umgeben ist, der Spulenkörper wiederum ist von der entsprechenden Wicklung umgeben.

Der Rückschlussring 10 ist aus mehreren Lagen metallischen Blechs aufgebaut.

Zwischen den einzelnen Abschnitten 9a, 9b etc. der Statorwicklung 9 weist der Spulenkörper radiale Erhebungen auf, die radial nach außen verlaufen bzw. radial nach innen (also zum Rotormagneten hin). In diesen Bereichen ist, ohne eine unnötige Feldbeeinflussung bzw. Wärmebeeinflussung durch den Elektromotor, die Durchführung der Medienleitung 8 für Licht bzw. einer Medienleitung 7 für Luft oder auch einer Medienleitung 6 für Wasser möglich. Prinzipiell können beliebig viele Medienleitungen durchgeführt werden, möglich sind auch Zuführungen von Datenleitungen bzw. Stromleitungen, falls das dentale Instrument hier zusätzliche Anschlüsse erfordern sollte. **Die Medienleitungen können also innerhalb oder außerhalb eines Rückschlussrings verlaufen. sie müssen nicht zwingend zwischen einzelnen Abschnitten oder Statorwicklungen verlaufen, sondern können auch durch eine Statorwicklung hindurch verlaufen.**

Das Verhältnis der Größenausdehnung des Stators radial zur Welle (größter Durchmesserbereich des Stators in Fig. 2, gemessen als Diagonale von den beiden am weitesten entfernten radialen Punkten der Statorwicklung) zur größten Ausdehnung des Stators in Richtung der Welle (also in Längsrichtung der Welle, vorliegend also fluchtend zur Kupplung 12, hier wiederum zwischen den Bereichen der Statorwicklung, die axial am weitesten voneinander entfernt sind) liegt bei 1,4.

Das Verhältnis der größten Ausdehnung des Stators radial zur Welle (hier wiederum das größte Durchmessermaß im Bereich der Statorwicklung) zur größten Länge des Rotormagneten (nur die Länge des eigentlichen Rotormagneten ist beachtlich) liegt bei 1,6.

Fign. 3a bis 3c zeigen verschiedene Ansichten eines erfindungsgemäßen Schlauchmotors. Hierbei ist der in einem Gehäuse angeordnete erfindungsgemäße Elektromotor 1, bei dem das Gehäuse linksseitig die Kupplung 12 nach DIN 3964 aufweist, rechtsseitig direkt mit einem Schlauch 13 verbunden, ohne dass hier noch eine zusätzliche Kupplung gegeben ist. Eine solche Kupplung würde höhere Baukosten, weitere Fehlerquellen sowie höheres Gewicht bedeuten. Die Medienleitungen für Luft, Wasser bzw. Licht 6, 7, 8 laufen hierbei durch den Schlauch 13 bis zu einer Antriebs- und Steuereinheit 14. Der größte Abstand von der Spitze der Kupplung 12 aus gemessen bis zur Mündung des Schlauches 13 in die Antriebs- und Steuereinheit 14 beträgt vorliegend 2,5 m.

Beachtlich ist, dass die Medienleitung 8 zur Durchführung von Licht, die **vorzugsweise** als Glasfaserleitung **(alternativ als Stromzuführung)** ausgeführt ist, direkt von der Antriebs- und Steuereinheit zu der Kupplung 12 ohne Unterbrechung verläuft. Eine Lichtquelle, die Licht in diesen Lichtleiter einspeist ist in der Antriebs- und Steuereinheit vorgesehen. Hierdurch entfällt die Notwendigkeit einer zusätzlichen Lichtquelle im Bereich des Elektromotors 1, die zusätzlichen Bauraum benötigen würde bzw. auch eine höhere Wärmeabgabe im Bereich der Bedienerhand bedeuten würde. Insbesondere durch Verzicht auf eine Kupplung zwischen Elektromotor und Schlauch wird außerdem gewährleistet, dass diese Kupplung einen Streulichtverlust erzeugt.

Bei der in Fig. 3a gezeigten Anordnung handelt es sich um einen Schlauchmotor zum Ankuppeln dentaler Instrumente, enthaltend einen Elektromotor 1 mit einem Stator 5 und einer Kupplung 12 zum Ankuppeln dentaler Instrumente. Zu dem Schlauchmotor gehörende Medienleitungen 6, 7, 8 zur Zuführung von Medien wie Druckluft, Wasser bzw. Licht zu dem dentalen Instrument sind durch den Schlauch 13 geführt. Der Schlauch ist an dem dem Elektromotor 1 abgewandten Ende mit einer Antriebs- und Steuereinheit 14 zur Zuführung und Regelung der Medien verbunden, beispielsweise durch eine Steckkupplung oder auch durch eine feste Verbindung. Wesentlich ist, dass der Elektromotor 1 mit dem Schlauch 13 einstückig und ohne Trennkupplung verbunden ist. Dies heißt, dass im "Normalbetrieb", beispielsweise in einer Zahnarztpraxis, der Schlauch 13 nicht von dem Elektromotor 1 zu trennen ist, sondern dass dies nur im Rahmen von Wartungsmaßnahmen möglich ist. Hierdurch ist es möglich, eine Gesamteinheit mit einer "Qualitätsgarantie" anzubieten, nämliche eine untrennbare Einheit von Schlauch und Motor, so dass es hier nicht durch inkompatible Geräte unterschiedlicher Hersteller zu Komplikationen kommen kann.

Zur Erläuterung geometrischer Größen wird auch auf Fig. 5 verwiesen.

Vorliegend ist das größte Radialmaß des Gehäuses 16 des Schlauchmotors D_{G} 22 mm.

Das Verhältnis der Länge l_{G} des Gehäuses des Schlauchmotors von der Anschlagkante der Kupplung 12 für dentale Instrumente bis zum schlauchseitigen Ende des Gehäuses 16 zu dem größten Radialmaß (D_{G}) des Schlauchmotors liegt bei 40/22.

Die Länge l_{G} als Absolutmaß beträgt 40 mm, einschließlich Führungshülse 15 beträgt sie l_{F+G} = 60 mm.

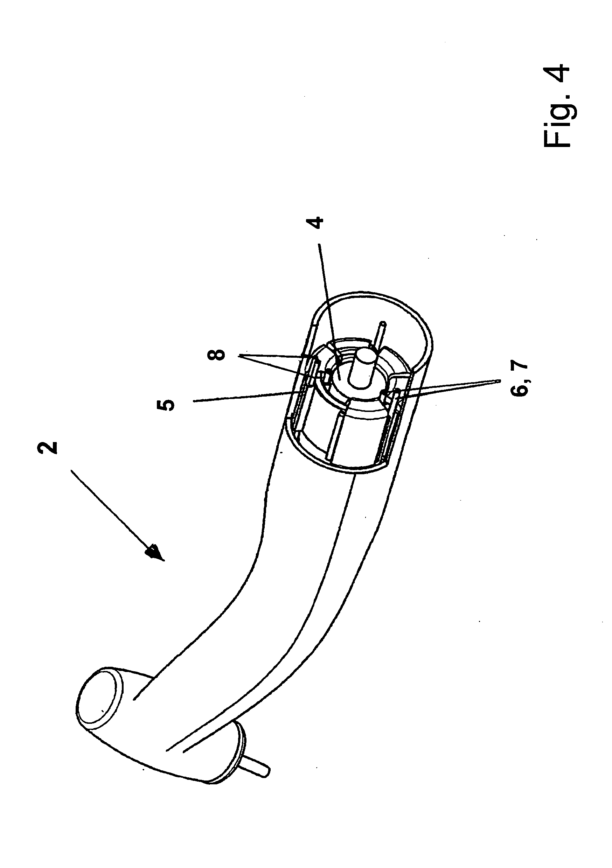

Fig. 4 zeigt ein Beispiel für ein dentales Instrument 2 mit einem integrierten Elektromotor. Mit "dentalem Instrument" ist im Kontext dieser Anmeldung ein Gerät bezeichnet, das motorbetrieben die Bearbeitung von Gegenständen bzw. Zähnen vorzugsweise durch einen Zahnarzt, einen Zahntechniker oder entsprechendem Personal ermöglicht.

Fig. 5 zeigt nochmals anhand des auch in den vorangegangen Figuren gezeigten Elektromotors verschiedene geometrische Verhältnisse. Der Elektromotor ist hierbei der mit der Grammeschen Statorwicklung versehene Elektromotor, dies ist allerdings nicht einschränkend zu verstehen, hier können auch andere Elektromotoren zur Anwendung kommen, die die erfindungsgemäßen Leistungsdaten aufweisen bzw. die ähnlich kleinbauend sind.

Der hier verbaute Elektromotor weist im Bereich zwischen 10 und 50.000 U/min ein Drehmoment von 1,5 Ncm auf.

Die linksseitige Kupplung ist eine Kupplung nach DIN ISO 3964, dies ist lediglich nur beispielhaft zu verstehen. Mit der erwähnten "Anschlagkante" ist die Anschlagkante 18 gemeint.

Die genannten Durchmesser und Längenwerte bzw. Verhältniswerte wurden bereits eingehend in der Beschreibungseinleitung bzw. der Figurenbeschreibung erläutert, hier folgt nochmals zusammenfassend die Erklärung der entsprechenden Längen.

Mit "D_{G}" ist der größte Durchmesser des Gehäuses 16 des Schlauchmotors gemeint. Mit "l_{G}" ist die größte Längenausdehnung des Gehäuses 16 gemeint, bis zum Abschluss des (aus Metall, insbesondere Titan, oder Kunststoff gebauten) Gehäuses. Konzentrisch innerhalb des schlauchseitigen Gehäuseendes ist hierbei eine Führungshülse F gezeigt, die Gesamtlänge von der Anschlagkante 18 bis zum Ende der Führungshülse ist mit l_{F+G} benannt.

Die größte radiale Ausdehnung des Stators ist mit "D_{Stator}" bezeichnet. Die größte Länge des Stators (in Wellenrichtung bzw. Rotorrichtung bzw. Richtung der Kupplung) ist mit "l_{Stator}" bezeichnet. Die größte Ausdehung des Rotormagneten ist mit "l_{Rotormagnet}" bezeichnet.

## Patentansprüche

1. Schlauchmotor (1) zum Ankuppeln dentaler Instrumente (2), enthaltend einen Motor mit einem Stator (5), einem Rotor sowie einer Kupplung (12) zum Ankuppeln dentaler Instrumente sowie einen Schlauch (13), wobei Medienleitungen (6, 7, 8) zur Zuführung von Medien zu dem dentalen Instrument (2) durch den Schlauch (13) geführt sind und der Schlauch an dem dem Motor abgewandten Ende mit einer Antriebs- und Steuereinheit (14) zur Zuführung und Regelung der Medien verbindbar ist,
**dadurch gekennzeichnet,**
**dass** der Elektromotor (1) mit dem Schlauch (13) ohne Trennkupplung verbunden ist.

2. Schlauchmotor nach Anspruch 1, **dadurch gekennzeichnet, dass** eine Medienleitung (8) für Licht durch den Schlauchmotor (1) bzw. den Schlauch (13) verläuft, wobei eine Lichtquelle in der Antriebs- und Steuereinheit vorgesehen ist.

3. Schlauchmotor nach einem der vorhergehenden Ansprüche, **dadurch gekennzeichnet, dass** die größte Länge des Schlauchmotors, beginnend bei der Spitze einer Kupplung (12) zum Einkuppeln dentaler Instrumente (2) bis zum Übergang des Schlauchs (13) zur Antriebs- und Steuereinheit (14) zwischen 1 m und 3 m beträgt.

4. Schlauchmotor nach einem der vorhergehenden Ansprüche, **dadurch gekennzeichnet, dass** eine radial in mehrere Abschnitte (9a, 9b) geteilte Grammesche Statorwicklung (9) vorgesehen ist, wobei zwischen einzelnen Abschnitten (9a, 9b), zumindest bereichsweise, Medienleitungen (6, 7, 8) verlaufen.

5. Schlauchmotor nach einem der vorhergehenden Ansprüche, **dadurch gekennzeichnet, dass** der Schlauchmotor (1) ein Permanentmagnet-Synchronmotor ist.

6. Schlauchmotor nach einem der vorhergehenden Ansprüche, **dadurch gekennzeichnet, dass** die Abschnitte (9a, 9b) der Statorwicklung (9) jeweils Einzelspulen darstellen.

7. Schlauchmotor nach einem der vorhergehenden Ansprüche, **dadurch gekennzeichnet, dass** der Stator (5) einen Rückschlussring (10) enthält und/oder dass dieser Rückschlussring von einem Spulenkörper des Stators radial innen und/oder radial außen umschlossen wird.

8. Schlauchmotor nach einem der vorhergehenden Ansprüche, **dadurch gekennzeichnet, dass** sich zwischen den Abschnitten (9a, 9b) der Statorwicklung radiale Erhebungen des Spulenkörpers (11) befinden.

9. Schlauchmotor nach einem der vorhergehenden Ansprüche, **dadurch gekennzeichnet, dass** die Medienleitungen (6, 7, 8) Leitungen zur Durchführung von Licht, Wasser, Luft, insbesondere Druckluft, und/oder elektrischem Strom sind.

10. Schlauchmotor nach einem der vorhergehenden Ansprüche, **dadurch gekennzeichnet, dass** das Verhältnis der Größenausdehnung (D_{Stator}) des Stators (5) radial zur Welle (3) zur größten Ausdehnung (l_{Stator}) des Stators (5) in Richtung der Welle (3) zwischen 0,8 und 5, vorzugsweise zwischen 1 und 3, besonders vorzugsweise zwischen 1,2 und 1,6 liegt.

11. Schlauchmotor nach einem der vorhergehenden Ansprüche, **dadurch gekennzeichnet, dass** das Verhältnis der größten Ausdehnung (D_{Stator}) des Stators (5) radial zur Welle (3) zur größten Länge (l_{Rotormagnet}) des Rotormagneten (4) in Wellenrichtung zwischen 1 und 6, vorzugsweise zwischen 1,2 und 2, besonders vorzugsweise zwischen 1,6 und 1,8 liegt.

12. (vormals Anspruch 13) Schlauchmotor nach einem der vorhergehenden Ansprüche, **dadurch gekennzeichnet, dass** das Verhältnis
• der Länge des Gehäuses (16) des Schlauchmotors vom Anschlag der Kupplung (12) für dentale Instrumente bis zum schlauchartigen Ende des Gehäuses (16) des Schlauchmotors ohne Führungshülse zu
• dem größten Radialmaß des Gehäuses des Schlauchmotors
zwischen 55/19 und 30/23, vorzugsweise zwischen 45/19 und 40/23 beträgt.

13. (neuer Anspruch) Schlauchmotor nach einem der vorhergehenden Ansprüche, **dadurch gekennzeichnet, dass** das Verhältnis
• Der Länge (l_{G}) des Gehäuses (16) des Schlauchmotors vom Anschluss (14) der Kupplung (12) für dentale Instrumente bis zum schlauchseitigen Ende des Gehäuses (16) einschließlich Führungshülse zu
• dem größten Radialmaß (D_{G}) des Gehäuses des Schlauchmotors
zwischen 80/19 und 45/23, vorzugsweise zwischen 65/19 und 60/23 liegt.

14. Schlauchmotor nach einem der vorhergehenden Ansprüche, **dadurch gekennzeichnet, dass** das Drehmoment des Elektromotors in einem Drehzahlbereich zwischen 10 U/min und 50.000 U/min, vorzugsweise im Bereich zwischen 100 U/min und 50.000 U/min, durchgehend mehr als 1 Ncm, vorzugsweise mehr als 1,2 Ncm, besonders vorzugsweise mehr als 1,5 Ncm beträgt.

15. Schlauchmotor nach einem der vorhergehenden Ansprüche, **dadurch gekennzeichnet, dass** der größte Durchmesser (D_{G}) des Gehäuses (16) des Schlauchmotors zwischen 19 und 23 mm beträgt.

16. Schlauchmotor nach einem der vorhergehenden Ansprüche, **dadurch gekennzeichnet, dass** die größte Länge (l_{G}) des Gehäuses (16) des Schlauchmotors von der Anschlagskante (14) der Kupplung zum dentalen Instrument hin zum Ende des Gehäuses (16) zwischen 30 und 55 mm und/oder bis zum Ende einer sich an das Gehäuse anschließenden Führungshülse (F) zwischen 45 und 80 mm beträgt.
